# EUROPÄISCHE PATENTSCHRIFT

(11) **EP 1 399 397 B1**
(45) Veröffentlichungstag und Bekanntmachung des Hinweises auf die Patenterteilung: **25.08.2010**
(21) Anmeldenummer: 02754198.6
(22) Anmeldetag: 13.06.2002
(51) Int. Cl.: C05D 9/00, C05G 3/04, C05G 3/00, A01G 31/02

(54) **FESTSTOFFHALTIGE, WASSERQUELLENDE UND -SAUGENDE, ANIONISCHE POLYMERE MIT SCHWAMMSTRUKTUR SOWIE DEREN HERSTELLUNG UND VERWENDUNG**
SOLIDS-CONTAINING, WATER-ABSORBING ANIONIC POLYMERS HAVING A SPONGE STRUCTURE AND THE PRODUCTION AND USE THEREOF
POLYMERES SPONGIEUX, ANIONIQUES, HYDRO-ABSORBANTS ET CONTENANT DES MATIERES SOLIDES, PRODUCTION ET UTILISATION DESDITS POLYMERES

(30) Priorität: 23.06.2001 DE 10130427
(43) Veröffentlichungstag der Anmeldung: 24.03.2004
(73) Patentinhaber: Geohumus International Research & Development GmbH, 60386 Frankfurt am Main (DE)
(72) Erfinder: Peppmöller, Reinmar, 47802 Krefeld (DE); Fabritz, Gerhard, 47800 Krefeld (DE)
(74) Vertreter: Maiwald Patentanwalts GmbH
(86) Internationale Anmeldenummer: PCT/DE2002/002159
(87) Internationale Veröffentlichungsnummer: WO 2003/000621

(56) Entgegenhaltungen:
- EP-A- 0 313 255
- WO-A-91/13541
- DD-A- 146 748
- FR-A- 2 791 992
- GB-A- 1 376 091
- PATENT ABSTRACTS OF JAPAN vol. 1998, no. 13, 30. November 1998 (1998-11-30) & JP 10 212188 A (MITSUBISHI MATERIALS CORP), 11. August 1998 (1998-08-11)

## Beschreibung

Gegenstand der Erfindung ist ein partikelförmiger, erdkrumenartiger, wasserabsorbierender und wasserquellbarer Feststoff, enthaltend gemahlene Mineralstoffe als Pflanzennährstoffe, Hilfsstoffe und Ballaststoffe, vorzugsweise und/oder überwiegend feingemahlenes Eruptivgestein als Pflanzennährstoffe, und gegebenenfalls zusätzlich weitere feste und/oder flüssige Zusatzstoffe, **dadurch gekennzeichnet, daß** die mineralischen Inhaltsstoffe, auf Trockensubstanz bezogen, mindestens 30 Gew.-% ergeben und in ein schwammartig ausgebildetes, vernetztes Polymerisat, das ,Wasser und wäßrige Flüssigkeiten unter Bildung eines Hydrogels aufnimmt, eingebunden sind, und gegebenenfalls zusatzlich wasserlösliches Alkalisilikat enthalten ist. Weiterhin werden zwei einfache Verfahren zur Herstellung von Produkten verschiedenen Neutralisationsgrades vorgestellt und Verwendungsmöglichkeiten genannt.

Durch die Art der Herstellung und der Zusammensetzung unterscheiden sich die erfindungsgemäßen Produkte von den herkömmlichen Materialien. Äußerlich besitzen die Produktpartikel Erdfarbigkeit und sind im ungetrockneten, erdfeuchten Zustand mit Humus direkt vergleichbar. Beim Quellungsprozeß in wäßrigen Flüssigkeiten tritt aufgrund der Zunahme des Porenvolumens ein Saugeffekt ein, der eine über die Absorptionsfähigkeit des Polymeranteils gehende Flüssigkeitsaufnahme bewirkt.

Wasser und wäßrige Flüssigkeiten aufnehmende Hydrogel bildende Polymerisate wurden bereits häufig beschrieben. Zur Herstellung werden monoethylenisch ungesättigte, wasserlösliche Carbonsäuren (z.B. Acrylsäure) und deren Derivate benutzt, meist nach Teilneutralisation der Säuregruppen mit Alkali, zusammen mit einem oder mehreren Vernetzern, die intramolekular mindestens zwei ethylenisch ungesättigte Gruppen aufweisen. Entweder erfolgt die Polymerisation in wäßriger Lösung oder nach den Verfahren der inversen Suspensions- oder Emulsionspolymerisation, wie sie in US 4,286,082, DE-PS 27 06 135, US 4,340,706, DE-PS 28 40 010 beschrieben worden sind.

Weitere Möglichkeiten bietet die Herstellung von Pfropfpolymerisaten, beispielsweise unter Verwendung von modifizierter Stärke und Cellulose (DE-OS 26 12 846) oder Polyvinylalkohol (DE-PS 40 20 780) und die Nachbehandlung der Polymergele oder der pulverförmigen Harze durch Nachvernetzung der Oberflächen der Polymerisatpartikel, beispielweise nach DE-PS 40 20 780 C1.

Als Comonomere werden wasserlösliche, monoethylenisch ungesättigte Monomere wie Acrylamid, Methacrylamid, N-alkylierte (Meth-)acrylamide, N-dialkylamino-alkylierte (Meth-)acrylamide, N-Methylol-(meth-)acrylamid, N-Vinylamide, N-Vinylformamid, N-Vinylacetamid und N-Vinyl-N-methyl-acetamid, N-Vinyl-N-methyl-formamid, Vinylpyrrolidon sowie Hydroxyalkyl-(meth-)acrylate wie Hydroxyethylacrylat und (Meth-)acrylsäureester von Polyethylenglykol-monoallylether und Allylether von Polyethylenglykolen verwendet.

Nach EP 205 674 A1 wird auch eine vorteilhafte Herstellung beschrieben, indem eine nicht vorneutralisierte, wäßrige Monomerenlösung der radikalischen Polymerisation bei Temperaturen im Bereich von 0 bis 100°C, vorzugsweise 5 bis 40°C, unterworfen wird und erst nach Durchpolymerisation und Zerkleinerung des entstandenen Hydrogels der gewünschte Neutralisationsgrad im Zwangsmischer mit Alkalihydroxidlösung eingestellt wird. GB -A- 137 6091 offenbart ein granulares, rieselfähiges unlösliches quellfähiges Polymer, das mit einen inerten Füllstoff gemischt wird. Alle auf die verschiedenste Weise erhältlichen Polymerisate werden im allgemeinen Sprachgebrauch auch Superabsorber genannt.

Eine bevorzugtes Verwendungsgebiet für diese Superabsorber ist der Hygiene- und Sanitärsektor. Man findet sie heute unter anderem in Inkontinenzartikeln, Babywindeln und Tampons. Es liegt auf der Hand, daß hierbei Hautneutralität sowie eine schnelle als auch vollständige Sekretaufnahme gefordert werden. Die Neutralisationsgrade der Hydrogele liegen daher zwischen 50 und 80 Mol-%, bezogen auf die im Polymer enthaltenen Säuregruppen. Die Spontaneität der Sekretaufnahme wird durch eine Wärmebehandlung der zuvor getrockneten und zerkleinerten Polymerpartikeln in Gegenwart eines Nachvernetzungsmittels erreicht (DE-PS 40 20 780 C1).

Es war naheliegend, die für den Hygienesektor gewonnenen, Hydrogele bildenden Polymerisate auch im botanischen Sektor als Wasserspeicher einzusetzen. Die Übertragung auf dieses Gebiet zeigte jedoch bald die Unterschiedlichkeit der Anforderungen.

Um ein gutes Pflanzenwachstum zu erreichen, mußte die Gesamtstruktur des Bodens in Kombination mit dem Superabsorber ebenfalls betrachtet werden. Begriffe wie Bodenklima und Bodenkapillarität gewannen an Bedeutung. Auch das für die Pflanzen notwendige Mineral- und Nährstoffangebot sollte zweckmäßigerweise berücksichtigt und integriert werden. Daneben stellte sich heraus, daß die Polymere gegenüber Erdalkali und UV-Licht noch recht empfindlich reagierten. Wie in dem deutschen Antrag auf Patenterteilung mit dem Aktenzeichen 101 14 169.6 berichtet, gelang es durch Zusatz von Alkalisilikat, die zuletzt genannten Eigenschaftsmängel der Polymeren weitgehend zu beseitigen. Die neue Aufgabe bestand nun darin, die Bodenstruktur und das Bodenklima mit Hilfe eines polymer- und feststoffhaltigen Materials, das gleichzeitig eine optimale Nährstoffquelle für die Pflanzen darstellt, so zu verbessern, daß für das Wachstum alle wichtigen Bedingungen erfüllt sind.

Durch die Produktporösität wird die Bodenkapillarität verbessert und gleichzeitig die Bodenqualität durch die Anwesenheit feingemahlener Mineralien positiv beeinflußt. Außerdem stellt der hohe Mineralstoffinhalt eine Beschwerung des Superabsorbers dar, so daß ein Aufschwemmen bei hoher Bodennässe unterbleibt.

Zur Erreichung gewünschter Produkteigenschaften lassen sich die polyynergebundenen Mineralstoffe in ihrer Art und Menge in weiten Grenzen variieren, wobei jedoch gemahlenes Eruptivgestein als mineralischer Pflanzennährstoff vorzugsweise und/ oder vorliegend im Gesamtprodukt enthalten ist. Dieses Gestein wird nach seinem rechnerischen SiO₂-Gehalt in zwei Gruppen eingeteilt. Die erste Gruppe, hier A und basisch genannt, hat einen SiO₂-Gehalt unter 50 Gew-%, die zweite Gruppe, hier B und sauer genannt, einen SiO₂-Gehalt über 50 Gew.-%. Da meistens das Herstellungsprodukt neutral sein soll, findet basisches Eruptivgestein der Gruppe A bevorzugt Verwendung. Dies nicht zuletzt auch deswegen, weil hierdurch Alkali eingespart werden kann. Saures Eruptivgestein der Gruppe B ist dann erwünscht, wenn das Herstellungsprodukt zur Behandlung ammoniakalischer und/oder alkalischer Flüssigkeiten oder Massen aus der bakteriellen Zersetzung organischer Substanzen (z.B. Gülle) benutzt werden soll.

Da die anorganische Zusammensetzung des Eruptivgesteins, besonders bezüglich der Spurenelemente, in Verbindung mit der Partikelgröße den Polymerisationsverlauf und damit die Schwammstruktur des Herstellungsproduktes beeinflusst, ist es notwendig, die Einflüsse der vorliegenden Gesteinsmehle anhand von Versuchen abzuklären. Da diese Gesteinsmehle gleichzeitig die mineralische Nährstoffquelle für die Pflanzen darstellen, sollte der Mahlgrad so gewählt werden, daß Partikelgrößen unter 200 um, bevorzugt unter 100 um vorliegen.

Die dem Eruptivgestein untergeordneten, zusätzlich beigefügten mineralischen Feststoffe wirken während des Herstellungsptozesses und bei der Anwendung in unterschiedlicher Weise, wie aus nachfolgender Aufstellung zu erkennen ist. Deren Einsatz ist jedoch nicht zwingend.

Zusätzlich verwendbare Mineralstoffe, aufgeteilt nach ihren Funktionen, sind:
a) säureempfindliche Hilfsstoffe als CO₂-Lieferant zur Inertisierung der Monomerenlösüng: z.B. Kreide Trass, Dolomit, Magnesit.
b) Feststoffe als Verdickungsmittel, Schwammstabilisatoren, Kationenfänger, Polymerisationsverzögerer und Quellungsbeschleuniger: Wasserabsorbierende Tonminerale wie Bentonit.
c) Ballast- und Füllstoffe: Mineralstoffe als natürliche Bestandteile der Erdkruste wie Feldspat, Quarzsand.

Es ist üblich, vor Polymerisationsbeginn die Monomerenlösung von Sauerstoff weitgehend zu befreien. Meistens wird hierzu längere Zeit Stickstoff eingeleitet. Es stellte sich heraus, daß carbonathaltige Mineralstoffe unter den vorliegenden Bedingungen genügend Kohlendioxid liefern können, um die Polymerisation durchzuführen und die gewünschte Schwammstruktur zu erzeugen. Wird auf diese Mineralstoffe verzichtet, kann alternativ Kohlendioxid eingeleitet oder carbonathaltiges Wasser benutzt werden. Mineralstoffe der Gruppe b) wie Bentonit besitzen die Eigenschaft, selbst geringe Flüssigkeitsmengen (und damit Monomerenlösung) aufnehmen zu können und Kationenbindungsvermögen zu besitzen. Sie tragen daher zur Festigkeit und zum Quellungsverhalten des Schwammes bei. Es muß allerdings beachtet werden, daß sie polymerisationsverzögernd wirken. Ihre Partikelgröße sollte zwischen 0,1 bis 8 mm, vorzugsweise zwischen 0,3 bis 5 mm liegen.

Die Mineralstoffe der Gruppe c) werden hier aufgeführt, obgleich sie für die Herstellung des Produktes keine besonderen Funktionen erfüllen. Da sie jedoch zu dem festen Mineralstoffanteil des Produktes gezählt werden müssen und produktbeschwerend wirken, dürfen sie hier nicht fehlen. Für diese Ballaststoffe gelten keine besonderen Bedingungen mehr, außer daß deren Partikelgröße derjenigen der Gruppe b) angepaßt sein sollte.

Der Feststoffanteil des erfindungsgemäßen Produktes liegt, auf Trockensubstanz bezogen, bei mindestens 30 Gew.-%. Zum Feststoffanteil gehören die Eruptivgesteine der Gruppen A und B als auch die mineralischen Feststoffe der Gruppen a) bis c).

Die für die Herstellung des Gesamtproduktes notwendigen restlichen Substanzen verteilen sich auf die chemischen Komponenten, Neutralisationsmittel und Alkalisilikat sowie gegebenenfalls auf K-, N-, P- und Si-haltige Düngemittel.

Bei der Durchführung der Polymerisation einer feststoffhaltigen, alkalihaltigen Monomerenlösung wurde erkannt, daß die vorher homogen verteilten Feststoffe zu Beginn der Polymerisation ausflocken können und dadurch die Schwammbildung erheblich stören. Aus diesem Grunde wurde ebenfalls ein Polymerisationsverfahren gesucht, das möglichst einfach in der Durchführung ist und bei dem ein Ausflocken und Verklumpen der Feststoffe nicht mehr stattfindet. Diese Aufgabe wurde auf verschiedene Weise gelöst, die dem jeweiligen Neutralisationswunsch entsprach:
Verfahren I : Es werden die Mineralstoffe und die nicht polymerisierenden wasserlöslichen Komponenten als wäßrige, alkalicarbonat- und/oder kohlendioxidhaltige Aufschlämmung, die zusätzlich zur Vermeidung von Verklumpungen einen oxydierend wirkenden Katalysator enthalten kann, vorgelegt und die wasserlöslichen, ethylenisch ungesättigte Säuregruppen enthaltenden Monomere einschließlich des Vernetzungsmittels und gegebenenfalls der Comonomeren anschließend eingetragen, wobei Kohlendioxid freigesetzt wird und Schaum entsteht. Nach Beendigung der Schaumentwicklung wird die Polymerisation durchgeführt. Danach wird das Produkt zerkleinert.

Eine Weiterbehandlung erübrigt sich, wenn dieses Produkt zur Aufnahme oder Behandlung von ammoniakalischen und/oder alkalischen Flüssigkeiten vorgesehen ist oder über die Einsatzmenge von basischem Eruptivgestein und Feststoffen der Gruppe a) ein pflanzenverträglicher pH-Bereich erreicht wurde. Ansonsten kann durch Nachbehandlung mit Erdalkali- und/oder Alkalihydroxid oder Vermischen mit Kalk bzw. Dolomit die überschüssige Azidität abgefangen werden.

Als weiteres Verfahren zur Herstellung von Produkten mit neutralem oder alkalischem pH-Wert, das mit einer optionalen Alkalimenge arbeitet und vom Ablauf her dem Verfahren I ähnelt, wird vorgestellt:
Verfahren II : Es werden die Mineralstoffe und die nicht polymerisierenden Komponenten als wäßrige Aufschlämmung, die säureneutralisierende Alkalisubstanzen wie Alkalihydroxid, Alkalicarbonat und Alkalisilikat in einer solchen Menge gelöst enthält, daß maximal 40 Mol-% der ethylenisch ungesättigten Säuren neutralisiert werden und optional eine weitere Menge, die in hydrophilen und/oder porösen Feststoffen enthalten ist, vorgelegt. Um ein vorzeitiges Reagieren der optionalen Menge mit den Säuregruppen der Monomerenlösung zu verhindern, wird diese zusätzlich oberflächlich z.B. mit Wachs verkapselt. Damit kann die Neutralisation vor und während der Polymerisation zeitlich so verzögert werden, daß die Ausbildung der Schwammstruktur ungestört stattfinden kann und trotzdem die zur Erreichung eines Neutralisationsgrades von 60 bis 80 Mol-% notwendige Alkalimenge im Produkt enthalten ist. Die weitere Verfahrensweise ist wie unter Verfahren I beschrieben.

Auf diese Weise werden je nach Belieben saure bis neutrale oder schwach alkalische Erzeugnisse mit stabiler Schwammstruktur erhalten, die im pHneutralen Zustand ähnlich wie die Superabsorber große Mengen von Wasser absorbieren. Die Wasseraufnahme verteilt sich auf den Porenraum und das Gelvolumen. Bei Einbringung in den Erdboden kommt es je nach Regenfall bzw. Wasserangebot zu einem "Atmen" des Bodens, was in Anwesenheit des mineralischen Nährstoffgehalts des Produktes zu einer verbesserten Bodenqualität und einem gesunden Bodenklima führt.

Nach der Herstellung und Zerkleinerung des Produktes bieten die zahllosen Porenöffnungen und Taschen die Möglichkeit, weitere Feststoffe unterschiedlichster Partikelgrößen und Schüttgewichte, ohne Lager- und Transportschwierigkeiten befürchten zu müssen, einzubringen. Diese können Eruptivgestein und/oder Vertreter der Gruppen a) bis c) sein, aber auch organische Substanzen natürlichen oder synthetischen Urspruchs, die als Gruppe N (nicht mineralisch) benannt sein sollen. Hierzu zählen in zerkleinerter Form z.B. Algen, Bast, Braunkohle, Hanf, Holz, Rizinusschrot, Steinkohle, Stroh, Torf sowie wasserunlösliche und wasserquellbare Polymerprodukte. Durch die Möglichkeit der nachträglichen Einbringung unterschiedlicher Füllstoffe ergeben sich auch agrarfremde Anwendungen, auf die später noch eingegangen wird. Das Öffnen und Schließen der Taschen kann über den Wassergehalt des Produktes gesteuert werden.

Wie oben bereits erwähnt, handelt es sich bei den Superabsorbern um wasserabsorbierende Polymere auf Basis von Homo- und Copolymerisaten monoethylenisch ungesättigter Carbonsäuren. Letztere können ergänzt werden durch weitere ethylenisch ungesättigte Säuregruppen enthaltende Monomere. Im einzelnen sind zu nennen:
Acrylsäure, Methacrylsäure, Ethacrylsäure, Crotonsäure, Sorbinsäure, Maleinsäure, Fumarsäure, Itaconsäure, Vinylsulfonsäure sowie Acrylamido-und Methacrylamido-alkylsulfonsäure wie z.B. 2-Acrylamido-2-methylpropansulfonsäure, 2-Methacryloyl-oxiethansulfonsäure, 4-Vinylbenzolsulfonsäure, Allylsulfonsäure, Vinyltoluolsulfonsäure, Vinylphosphonsäure und Vinylbenzolphosphonsäure.

Für die wasserlöslichen, copolymerierbaren, ethylenisch ungesättigten Monomeren gilt die bereits genannte Liste von Substanzen, so daß diese nicht wiederholt zu werden braucht. Der Anteil der Comonomeren kann bis zu 50 Gew.-% betragen, bezogen auf die polymerisierbaren Komponenten der Monomerenmischung. Die Monomerenmischung kann weiterhin wasserlösliche Polymere bis zu 30 Gew.-% enthalten, bezogen auf die polymerisierbare Substanz der Monomerenmischung. Als lösliche Polymere werden genannt: Homo- und Copolymerisate der zuvor genannten Monomeren , teilverseiftes Polyvinylacetat, Polyvinylalkohol, Stärke, Stärkederivate, Pfropfpolymerisierte Stärke, Cellulose und Cellulosederivate wie Carboxymethylcellulose, Hydroxymethylcellulose sowie Galktomannose und dessen oxalkylierte Derivate.

Die wäßrige Monomerenlösung enthält mindestens einen Vernetzer in einer Menge von 0,01 bis 5 Gew.-%, vorzugsweise 0,1 - 2,0 Gew.-%, bezogen auf die Gesamtheit der polymerisierbaren Monomeren. Als Vernetzer lassen sich alle Substanzen verwenden, die mindestens zwei ethylenisch ungesättigte Gruppen oder mindestens eine ethylenisch ungesättigte Gruppe und mindestens eine weitere funktionelle Gruppe enthalten,die gegenüber Säuregruppen reaktiv ist. Als Vertreter werden genannt:
Methylenbisacrylamid, Mono, Di- und Polyester der Acrylsäure, Methacrylsäure, Itaconsäure und Maleinsäure von mehrwertigen Alkoholen wie von Butandiol, Hexandiol, Polyethylenglykol, Trimethylolpropan, Pentaerythrit, Glycerin und Polyglycerin sowie von den daraus resultierenden oxalkylierten Homologen als auch die Ester dieser Säuren mit Allylalkohol und seinen oxalkylierten Homologen. Weiterhin seien aufgeführt: Diallylacrylamid, Diallylphthalat, Triallylcitrat, Tri-monoallylpolyethylenglykolether-citrat sowie Allylether von Di- und Polyolen und deren Oxethylate. Vertreter der zuletzt genannten Gattung sind Polyallylether von Glycerin, Trimethylolpropan, Pentaerythrit und deren Oxethylate als auch Tetraallyloxiethan und Polyglycidylallylether wie Ethylenglykoldiglycidether und Glyceringlycidylether. Zum Schluß sollen ebenfalls auch die Amine und deren Salze mit mindestens zwei ethylenisch ungesättigten Substituenten aufgeführt werden: Die sind Di- und Triallylamin und Tetraallylammoniumchlorid.

Zur Initiierung der radikalischen Polymerisation werden Redoxsysteme verwandt, die als gebräuchlich einzustufen sind, z.B. Peroxo- und Azoverbindungen wie Kaliumperoxomonosulfat, Kaliumperoxodisulfat, tert. Butylhydroperoxid, 2,2'-Azo-bis(2-methylenpropionamidin)-dihydrochlorid und Wasserstoffperoxid zusammen mit einem oder mehreren Reduktionsmitteln wie Kaliumsulfit, Kaliumformamidinsulfinat und Ascorbinsäure. Hierbei wird vorzugsweise das Oxydationsmittel vorgelegt. Bei der betrieblichen Polymerisation erfolgt die Initiierung vorzugsweise durch Photokatalyse und Sensibilisatoren.

Da die Produkte nach der Herstellung in Form von Blöcken anfallen, ist eine Zerkleinerung vor der weiteren Verwendung notwendig. Der erste Schritt ist meist ein Zerschneiden, so daß Scheiben, Matten oder kleinere Blöcke entstehen. Bleibt man bei der Mattenform, lassen sich durch weiteres Zerschneiden oder Stanzen die verschiedensten Formen erreichen. So können Vierkantstäbchen hergestellt werden, die den Pflanzenwurzeln nachträglich den für das Wachstum notwendigen Mineral- und Düngerbedarf liefern, wenn sie in deren Nahrungsbereich gesteckt werden. Es kann aber auch sofort eine Häckselmaschine eingesetzt werden, womit die Herstellung von erdartigen Krumen direkt möglich ist. Diese sind in Aussehen und Beschaffenheit besonders gut an Humus angepaßt. Im herstellungsfrischen Zustand ist noch eine gewisse Klebrigkeit vorhanden, die dazu ausgenutzt werden kann, die verschiedensten Formen und Gebilde durch einfaches Zusammenpressen der Krumen zu erzeugen.

Die Erzeugnisse sind für das Wachstum, die Keimung und Kultivierung von Pflanzen hervorragend geeignet und ergeben daher auch bei der Zumischung in ungünstige Erdböden und schlechten Witterungsverhältnissen gute Pflanzresultate. Nebenbei erlauben sie zusätzlich eine Einschränkung der Bewässerungsintervalle und sind daher besonders in regenarmen Anbaugebieten nutzbringend. Es ist möglich, die erfindungsgemäßen Produkte auch alleine zur Pflanzenaufzucht zu verwenden. Eine besonder Anwendungsform ist der Einsatz in Pflanzbehältern, die mit einem Wasserreservoir durch Kapillarstäbe verbunden sind und aus denen sich die Produktschwämme das Wasser holen, das ihnen durch die Pflanzenwurzeln genommen wird.

Die Krumen mit ihren Poren und Taschen sind als Trägerstoff für die verschiedensten Feststoffe hervorragend geeignet. Von den zahlreichen Kombinationsmöglichkeiten soll hier die nachträgliche Abmischung mit Rizinusschrot genannt werden. Rizinusschrot fällt bei der Rizinusölgewinnung an und zählt zu den festen Düngemitteln.

Möglich ist auch eine Kombination eines düngerfreien Produktes mit Holzmehl oder Holzspänen, das anschließend getrocknet als "Tierstreu" für die Tierhaltung genutzt werden kann.

Interessant wäre es auch, die Krumen nachträglich mit feinstkörnigen, oftmals staubenden, synthetischen Polymerpartikeln auszurüsten, deren Verwendung in reiner Form normalerweise problematisch ist. Durch die Klebewirkung der frischen Krumen lassen sich auch Gewebe oder Vliese rieselfrei ausrüsten und überall dort einsetzen, wo wasserabsorbierende Produkte gebunden und/oder fixiert gefragt sind. Hierzu zählen Hangbegrünungen, Beilagen für den Warentranport und Sargeinlagen.

Werden diese krumenhaltigen Gewebe und Vliese zusätzlich mit schwimmfähigen Natur- und Kunststoffen ausgestattet, können diese in Feuchtgebieten zur Pflanzenzucht wie Reisanbau und auch zur Insektenbekämpfung bei entsprechender Ausrüstung eingesetzt werden.

Hieraus wird ersichtlich, daß die erfindungsgemäßen Erzeugnisse aufgrund ihrer außergewöhnlichen Eigenschaft und Taschenstruktur gleichzeitig Synergieträger und Trägermaterial für die unterschiedlichsten Fest- und Flüssigprodukte sind. Sie sind also nicht nur Wasserspeicher und Nährstoffquelle.

Die Erfindung wird zusätzlich beschrieben durch die in den Ansprüchen angegebenen Sachverhalte.

### Ausführungsbeispiele:

Folgende Feststoffe wurden eingesetzt:
   a) Eifellava: Eifelgold-Urgesteinsmehl, Fa. LAVA-UNION GmbH, 53489 Sinzig,
   b) Trass: Fa. Märker-Zementwerk GmbH, 86665 Harburg
   c) Bentonit: Smektonit Agrarbentonit 0/8 der Fa. MARX Bergbau GmbH & Co. 5431 Ruppach-Goldhausen
   Die Chemikalien wurden von der Fa. Merck Eurolab GmbH, 44866 Bochum geliefert.
   Wako V-50 ist bei Fa. Wako Chemicals GmbH, Neuss erhältlich, Kaliwasserglas vom Typ 28-30°Bé bei Fa. Baerle & CO, 76593 Gernsbach/Rhein.

### Beispiel 1:

40,0 g feingemahlene Eifellava, 15,0 g feingemahlener Trass und 15,0 g mittelgrob gemahlener Bentonit werden in 40,0 g enthärtetes, kohlendioxidhaltiges Wasser homogen eingerührt. Sodann werden eine Monomerenlösung, bestehend aus 15,0 g Acrylamid, 35,0 g Acrylsäure , 160 mg 1,4-Butandioldiacrylat und 30,0 g enthärtetem Wasser so unter Rühren portionsweise eingetragen, daß die Schaumbildung beherrscht wird. Ist das Schäumen beendet, wird die Polymerisation durch Zugabe nachfolgender Katalysatoren in der angegebenen Reihenfolge gestartet: 1 ml einer 1,0 Gew.-%igen Lösung von Wako V 50, 2 ml einer 1,0 Gew.-%igen Natriumperoxidisulfatlösung, 1 ml einer 0,2 Gew.-%igen
Ascorbinsäurelösung und 1 ml einer 1,25 Gew.-%igen Kaliumdisulfitlösung. Der nach der Polymerisation entstandene Polymerblock nimmt nach der Zerkleinerung nur sehr begrenzt Wasser auf, da die Säuregruppen des Polymerisates nicht neutralisiert wurden. Ammoniakalische Flüssigkeiten werden jedoch schnell und mit guter Quellfähigkeit aufgenommen. Werden die nach dem Häckseln erhaltenen Krumen in Leitungswasser von 20°dH gelegt, das 15,0 g Ätzkali und 3,0 g Kaliwasserglas enthält, tritt über einen Zeitraum von 24 h eine ca. 30-fache Gewichtszunahme ein.

### Beispiel 2:

40,0 g feingemahlene Eifellava, 15,0 g feingemahlener Trass und 15,0 g mittelgrob gemahlener Bentonit werden in 70,0 g enthärtetes, kohlendioxidhaltiges Wasser homogen eingerührt. Sodann werden 5 g Kaliumwasserglas und eine Monomerenlösung, bestehend aus
50,0 g Acrylsäure und 160 mg 1,4-Butandioldiacrylat so unter Rühren portionsweise eingetragen, daß die Schaumbildung beherrscht wird. Nach dem Abklingen des Schäumens wird die Polymerisation analog Beispiel 1 initiiert. Werden die nach dem Häckseln erhaltenen Krumen in Leitungswasser von 20°dH gelegt, das 21,5 g Ätzkali enthält, resultiert nach 24 h nahezu eine ca. 40-fache Gewichtszunahme.

### Beispiel 3:

20,0 g feingemahlene Eifellava und 5,0 g mittelgrob gemahlener Bentonit werden in 70,0 g enthärtetes, kohlendioxidhaltiges Wasser homogen eingerührt. Sodann werden 5 g Kaliumwasserglas und eine Monomerenlösung, bestehend aus
50,0 g Acrylsäure und 160 mg 1,4-Butandioldiacrylat so unter Rühren portionsweise eingetragen, daß die Schaumbildung beherrscht wird. Nach dem Abklingen des Schäumens wird die Polymerisation analog Beispiel 1 initiiert. Werden die nach dem Häckseln erhaltenen Krumen in Leitungswasser von 20°dH gelegt, das 21,5 g Ätzkali enthält, resultiert nach 24 h eine ca. 60-fache Gewichtszunahme.

### Beispiel 4:

115 g feingemahlene Eifellava, 15,0 g feingemahlener Trass und 20,0 g mittelgrob gemahlener Bentonit werden in 64,0 g enthärtetes, kohlendioxidhaltiges Wasser, das 12,0 g Kaliwasserglas, 14 g Kaliumhydroxid (100 %), 2,0 g Harnstoff und 1,5 g Phosphorsäure (50 %) enthält, homogen eingerührt. Anschließend werden 2ml einer 1,0 Gew.-% Natriumperoxidisulfatlösung zugesetzt. Sodann erfolgt unter ständigem Rühren die Eintragung von 50,0 g Acrylsäure, zusammen mit 0,2 g 1,4-Butandiol-diacrylat. Nach dem Abklingen des Schäumens wird analog Beispiel 1 die Polymerisation gestartet. Nach dem Häckseln erreichen die Krumen nach 24-stündiger Lagerung in Leitungswasser von 20°dH das 20-fache ihres ursprünglichen Gewichtes.

### Beispiel 5:

100 g feingemahlene Eifellava, 15,0 g feingemahlener Trass und 40,0 g mittelgrob gemahlene Bentonit/Blähton-Mischung (1:1), die 10,0 g 50-Gew.-%-ige Kaliumhydroxidlösung und 12,0 g Kaliwasserglas eingeschlossen und mit Wachs verkapselt enthält, werden in 64,0 g enthärtetes Wasser, das 2,0 g Harnstoff, 1,5 g Phosphorsäure (40 %) und 14,0 g Kaliumhydroxid (100 %), enthält, homogen eingerührt. Anschließend werden 2 ml einer 1,0 Gew.-%igen Natriumperoxidisulfatlösung zugesetzt. Sodann erfolgt unter ständigem Rühren die Eintragung von 50,0 g Acrylsäure, zusammen mit 0,2 g Butandioldiacrylat. Nach dem Abklingen des Schäumens wird analog Beispiel 1 die Polymerisation gestartet. Nach dem Häckseln erreichen die Krumen nach 24-stündiger Lagerung in Leitungswasser von 20°dH das 28-fache ihres ursprünglichen Gewichtes.

### Beispiel 6:

Eine Teilmenge von 100,0 g aus einem Ansatz analog Beispiel 4 wurde gehäckselt und die Krumen nach der Herstellung mit 15,0 g Calciumcarbonat vermischt und teilgetrocknet. Das Mischprodukt wurde als Pflanzsubtrat benutzt und ergab für Gerstesamen hervorragende Wachstumbedingungen.

### Beispiel 7:

Eine Teilmenge von 100,0 g aus einem Ansatz analog Beispiel 4 wurde gehäckselt und die Krumen nach der Herstellung mit 100,0 g Holzmehl vermischt und teilgetrocknet. Das Mischprodukt ergab Tierstreu.

### Beispiel 8:

Eine Teilmenge von 100,0 g aus einem Ansatz analog Beispiel 4 wurde gehäckselt und die Krumen nach der Herstellung mit 100,0 g Rizinusschrot vermischt und teilgetrocknet. Das Produkt wurde als Pflanzsubstrat in Blumenkästen eingesetzt.

## Patentansprüche

1. Partikelförmiger, erdkrumenartiger, wasserabsorbierender und wasserquellbarer Feststoff, enthaltend gemahlene Mineralstoffe und gegebenenfalls zusätzlich weitere feste und/oder flüssige Zusatzstoffe,
**dadurch gekennzeichnet, dass** die gemahlenen Mineralstoffe, auf Trockensubstanz bezogen, mindestens 30 Gew.-% ergeben und in ein schwammartig ausgebildetes, vernetztes Polymerisat, das Wasser und wässrige Flüssigkeiten unter Bildung eines Hydrogels aufnehmen kann, eingebunden sind, und zusätzlich wasserlösliches Alkalisilikat enthalten ist, wobei die Mineralstoffe ausgewählt sind aus Pflanzennährstoffen, Hilfsstoffen oder Ballaststoffen und wobei das darin enthaltene Polymerisat gebildet wurde aus
a) 55 bis 99,9 Gew. -% mindestens eines wasserlöslichen, ethylenisch ungesättigten, Säuregruppen enthaltenden Monomers,
b) 0 bis 40 Gew. -% mindestens eines wasserlöslichen, ethylenisch ungesättigten, mit dem Monomer aus a) polymerisierbaren Comonomers,
c) 0,01 bis 5Gew.-% mindestens eines Vernetzers und
d) 0 bis 30 Gew-% eines wasserlöslichen Polymers.

2. Feststoff nach Anspruch 1,
**dadurch gekennzeichnet, dass** die Mineralstoffe ausgewählt sind aus mindestens einem aus feingemahlenem Eruptivgestein; basischem Eruptivgestein mit einem rechnerischen SiO₂-Gehalt unter 50 Gew.-%; saurem Eruptivgestein mit einem rechnerischen SiO₂-Gehalt über 50 Gew.-%, Kreide, Dolomit, Trass, Magnesit und Umsetzungsprodukte davon mit Säuregruppen-enthaltenden Monomeren unter CO₂-Entwicklung; und wasserabsorbierenden Tonminerale wie Bentonit; Feldspat oder Quarzsand.

3. Feststoff nach Anspruch 1 oder 2, ferner umfassend Mineralstoffe als Verdickungsmittel, Schwammstabilisatoren, Kationenfänger, Polymerisationsverzögerer und/oder Quellungsbeschleuniger.

4. Feststoff nach den Ansprüchen 1 bis 3, ferner umfassend zusätzliche feste Inhaltsstoffe ausgewählt aus natürlichen oder synthetischen organischen Produkten wie Algen, Bast, Braunkohle, Hanf, Holz, Rhizinusschrot, Steinkohle, Stroh, Torf und/oder wasserunlösliche und wasserquellbare Polymerprodukte.

5. Feststoff nach den Ansprüchen 1 bis 4,
**dadurch gekennzeichnet, dass** als wasserlösliches Alkalisilikat Kaliumsilikat enthalten ist, wie es aus der Alkalischmelze von Quarzsand entsteht.

6. Feststoff nach den Ansprüchen 1 bis 5,
**dadurch gekennzeichnet, dass** zusätzlich mindestens ein fester oder flüssiger Vertreter aus der Gruppe der K-, N-, P-, Si-haltigen Düngemittel enthalten ist.

7. Feststoff nach Anspruch 1,
**dadurch gekennzeichnet, dass** das wasserlösliche, ethylenisch ungesättigte Säuregruppen enthaltende Monomer ausgewählt ist aus mindestens einem aus Acrylsäure, Methacrylsäure, Ethacrylsäure, Crotonsäure, Sorbinsäure, Maleinsäure, Fumarsäure, Itaconsäure, Vinylsulfonsäure, sowie Acrylamido-und Methacrylamido-alkylsulfonsäuren wie Acrylamido-2-methylpropansulfonsäure, 2-Methacryloyl-oxyethansulfonsäure, 4-Vinylbenzolsulfonsäure, Allylsulfonsäure, Vinyltoluolsulfonsäure, Vinylphosphonsäure oder Vinylbenzolphosphonsäure.

8. Feststoff nach Anspruch 7,
**dadurch gekennzeichnet, dass** das Monomer ausgewählt ist aus Acrylsäure, Methacrylsäure und/oder Maleinsäure.

9. Feststoff nach den Ansprüchen 1 bis 8,
**dadurch gekennzeichnet, dass** das wasserlösliche, ethylenisch ungesättigte Comonomer ausgewählt ist aus mindestens einem aus Acrylamid, Methacrylamid, N-alkylierte (Meth-)acrylamide, N dialkylamino-alkylierte (Meth-)acrylamide, N-Methylol-(meth-)acrylamid, N-Vinylamide wie N-Vinylformamid, N-Vinylacetamid und N-Vinyl-N methyl-acetamid, N-Vinyl-N-methylformamid als auch Vinylpyrrolidon sowie Hydroxyalkyl-(meth-)acrylate wie Hydroxyethylacrylat und (Meth-)acrylsäureester von Polyethylenglykolmonoallylether und Allylether von Polyethylenglykolen.

10. Feststoff nach den Ansprüchen 1 bis 9,
**dadurch gekennzeichnet, dass** die polymerisierbaren wasserlöslichen, ethylenisch ungesättigten, Säuregruppen enthaltenden Monomere als Kaliumsalze vorliegen.

11. Feststoff nach den Ansprüchen 1 bis 10,
**dadurch gekennzeichnet, dass** die Mineralstoffe Lava, Tuff und/oder Diabas mit einer Partikelgröße unter 200 µm, bevorzugt unter 100 µm sind.

12. Verfahren zur Herstellung eines partikelförmigen, erdkrumenartigen, wasserabsorbierenden und wasserquellbaren Feststoffs nach den Ansprüchen 1 bis 11, **dadurch gekennzeichnet, dass** die mittel- bis feingemahlenen Mineralstoffe zusammen mit den ggf. vorhandenen nicht polymerisierenden Komponenten als wässrige Erdalkalicarbonat, Alkalicarbonat und-/oder kohlendioxidhaltige Aufschlämmung, vorgelegt werden und mindestens ein wasserlösliches, ethylenisch ungesättigtes, Säuregruppen enthaltendes Monomer und ein Vernetzungsmittel anschließend eingetragen, mit der Aufschlämmung unter Freisetzung von Kohlendioxid zur Reaktion gebracht werden und nachfolgend nach Beendigung der Schaumentwicklung die Polymerisation durchgeführt wird, und abschließend der erhaltene Polymerblock zerschnitten und über einen Häcksler oder Fleischwolf so zerkleinert wird, dass Krumen entstehen.

13. Verfahren nach Anspruch 12,
**dadurch gekennzeichnet, dass** zusätzlich zur Vermeidung von Verklumpungen ein oxidierend wirkender Katalysator zugesetzt wird.

14. Verfahren nach den Ansprüchen 12 oder 13,
**dadurch gekennzeichnet, dass** das Monomer und das Vernetzungsmittel gegebenenfalls mit den Comonomeren zusammen in die Aufschlämmung eingetragen werden.

15. Verfahren nach den Ansprüchen 12 bis 14,
**dadurch gekennzeichnet, dass** die Aufschlämmung säureneutralisierende Erdalkali- und Alkalisubstanzen, vorzugsweise Alkalihydroxid, Alkalicarbonat und Alkalisilikat, in einer solchen Menge gelöst enthält, dass maximal 40 mol-% der Säuregruppen neutralisiert werden.

16. Verwendung des Feststoffs nach den Ansprüchen 1 bis 11, mit einem Neutralisationsgrad von 1 bis 40 mol-%, zur Aufnahme alkalischer und/oder ammoniakalischer Flüssigkeiten und zur Behandlung von Massen aus der bakteriellen Zersetzung organischer Substanzen, z. B. Gülle.

17. Verwendung des Feststoffs nach den Ansprüchen 1 bis 11 als Wasserspeicher und Nährstofflieferant für das Wachstum, die Keimung und die Kultivierung von Pflanzen, entweder ohne weitere Zumischung als Pflanzsubstrat oder als Bodenzusatzstoff in Abmischung mit Erdboden zur Verbesserung des Bodens und des Bodenklimas, als Trägermaterial für feste und flüssige Düngemittel, eingebettet in natürliche und/oder synthetische, flächenartige Faserkonstruktionen wie Matten oder Vliese, zur Hangbegrünung, zur Dachbegrünung, eingebettet zusammen mit schwimmfähigen Natur- oder Kunststoffen in natürliche und/oder synthetische, flächenartige Faserkonstruktionen wie Matten oder Vliese, zur Kultivierung von Pflanzen wie Reis in Feuchtgebieten wie ganz oder teilweise überflutete Bodenflächen, als Trägermaterial für Insektizide, Pestizide, Bakterizide und Fungizide, als Trägermaterial für staubende, fein- bis feinstkörnige mineralische, biologisch-natürliche und/oder synthetische Feststoffpartikel wie Unterkomfraktionen gemahlener Polymerisate, oder zur Herstellung von Staubfiltern.

## Claims

1. A particulate, soil-like crumbly, water absorbing and water swellable solid product comprising ground mineral materials and optionally further solid and/or liquid additives, **characterised in that** the ground mineral materials amount to at least 30% by weight referring the dry substance, and are bound into a sponge-like crosslinked polymer that is capable of forming a hydrogel with water and aqueous liquids, and which additionally comprises water soluble alkali silicate, wherein the mineral materials are selected from plant nutrients, adjuvants, and ballast materials and wherein the polymer contained therein was formed of
a) 55 to 99.9 wt. % of at least one water-soluble, ethylenically unsaturated, acid groups containing monomer,
b) 0 to 40 wt. % of at least one water-soluble, ethylenically unsaturated, comonomer polymerisable with the monomer of a),
c) 0.01 to 5 wt.% of at least one crosslinker, and
d) 0 to 30 wt.% of at least one polymer.

2. The product of claim 1, **characterised in that** the mineral materials are selected from at least one of finely grounded igneous rock; basic igneous rock containing a calculated SiO₂ amount of less than 50 wt.%; acidic igneous rock having a calculated SiO₂ amount of more than 50 wt.%; chalk, dolomite, trass, magnesite and reaction products thereof with acid group containing monomers under evolution of CO₂; water-absorbing clay minerals, bentonite; feldspar, or quartz-sand.

3. The product of claims 1 or 2 further comprising mineral materials as thickeners, sponge stabilisers, cation-catchers, polymerisation inhibitors and/or swelling promoters.

4. The product of claim 1 to 3, further comprising additional solid ingredients selected from natural or synthetic organic products such as algae, bast, brown coal, hemp, wood, castor oil plant grist, mineral coal, straw, peat and/or water-insoluble and water-swellable polymer products.

5. The product of claims 1 to 4, **characterised in that** potassium silicate is included as the water-soluble alkali silicate, as it is formed from an alkali melt of quartz sand.

6. The product of claims 1 to 5, **characterised in that** additionally at least one solid or liquid representative from the group of K-, N-, P-, Si-containing fertilisers is included.

7. The product of claim 1, **characterised in that** the water-soluble, ethylenically unsaturated, acid groups containing monomer is selected from at least one of acrylic acid, methacrylic acid, ethacrylic acid, crotonic acid, sorbic acid, maleic acid, fumaric acid, itaconic acid, vinyl sulfonic acid and acrylamido- or methacrylamido alkyl sulfonic acids such as acrylamido-2-methylpropan sulfonic acid, 2-methacryloyl oxyethane sulfonic acid, 4-vinylbenzene sulfonic acid, allyl sulfonic acid, vinyltoluene sulfonic acid, vinyl phosphonic acid and vinyl benzene phosphonic acid.

8. The product of claim 7, **characterised in that** the monomer is selected from at least one of acrylic acid, methacrylic acid and/or maleic acid.

9. The product of claims 1 to 8, **characterised in that** the water-soluble, ethylenically unsaturated comonomer is selected from at least one of acrylamide, methacrylamide, N-alkylated (meth-)acrylamides, N-dialkylamino-alkylated (meth-)acrylamides, N-methylol-(meth-)acrylamides, N-vinylamides such as N-vinylformamide, N-vinylacetamide, N-vinyl-N-methyl-acetamide, N-vinyl-N-methylformamide; as well as vinylpyrrolidone, and hydroxyalkyl(meth-)acrylates such as hydroxyethylacrylate, and (meth-)acrylic acid esters of polyethylene glycol-monoallylether and allylethers of polyethylene glycols.

10. The product of any one of claims 1 to 9, **characterised in that** the polymerisable water-soluble, ethylenically unsaturated, acid groups containing monomers are present as potassium salts.

11. The product of claims 1 to 10, **characterised in that** the mineral materials are lava, tuff, and/or diabase having a particle size less than 200 µm, preferably less than 100 µm.

12. A process for the manufacture of the particulate, soil-like crumbly, water absorbing and water swellable solid product of claims 1 to 11, **characterised in that** the medium to finely grounded mineral materials are provided together with the non-polymerising components as aqueous, alkaline earth carbonate, alkalicarbonate and/or carbon dioxide containing slurry, and at least one water-soluble, ethylenically unsaturated, acid groups containing monomer and the crosslinker are subsequently added, and the slurry is reacted under release of carbon dioxide, and, after the formation of foam has stopped, the polymerisation is subsequently initiated, and the obtained polymer block is finally shredded with the use of a shredder or mincer so that crumbs are formed.

13. The process of claim 12, **characterised in that** an oxydizing catalyst is additionally added to avoid agglutination.

14. The process of claims 12 or 13, **characterised in that** the monomer and the crosslinker are optionally added to the slurry together with a comonomer.

15. The process of claims 12 to 14, **characterised in that** the slurry includes acid neutralising alkaline earth and alkaline substances, preferably alkali hydroxide, alkali carbonate or alkali silicate, in an amount sufficient to neutralise at maximum 40 Mol% of the acid groups.

16. The use of the product of claims 1 to 11, having a neutralisation level from 1 to 40 Mol-% for the absorption of basic or aqueous ammonia liquids and for the treatment of bulk compounds arising from bacterial decomposition of organic materials, for example liquid manure.

17. The use of the product of claims 1 to 11 for water storage and as a supplier for nutrients for growth, germination and the cultivation of plants, either without further addition of soil, or as a soil additive in admixture with soil for improving the soil and the soil climate, as a carrier for solid and liquid fertilisers, embedded in natural and/or synthetic flat-fibre constructions for cultivating vegetation on slopes, for cultivating vegetation on roofs, embedded in natural and/or synthetic flat fibre constructions together with floatable natural or synthetic materials, for cultivation of plants such as rice in wetland such as totally or partially flooded land areas, as a carrier for insecticides, pesticides, bactericides and fungicides, as a carrier material for dusting, fine to ultrafine mineral, biologically-natural and/or synthetic solid particles such as undersize fractions of ground polymers, or for manufacturing dust filters.

## Revendications

1. Matière solide particulaire, de type terre meuble, absorbant l'eau et gonflant dans l'eau, contenant des matières minérales broyées et le cas échéant, en outre, d'autres additifs solides et/ou liquides,
**caractérisée en ce que** les matières minérales broyées, sur base des matières sèches, constituent au moins 30 % en poids, **en ce qu'**elles sont incorporées dans un polymère spongieux, réticulé, qui peut absorber l'eau et des liquides aqueux avec formation d'un hydrogel, et **en ce qu'**en outre, un silicate alcalin soluble dans l'eau est présent, où les matières minérales sont choisies parmi des éléments nutritifs pour végétaux, auxiliaires ou charges et où le polymère y présent a été formé à partir de
a) 55 à 99,9 % en poids d'au moins un monomère éthyléniquement insaturé, contenant des radicaux acide, soluble dans l'eau,
b) 0 à 40 % en poids d'au moins un comonomère éthyléniquement insaturé, polymérisable avec le monomère a),
c) 0,01 à 5 % en poids d'au moins un agent de réticulation, et
d) 0 à 30 % en poids d'un polymère soluble dans l'eau.

2. Matière solide selon la revendication 1, **caractérisée en ce que** les matières minérales sont choisies parmi au moins des roches volcaniques finement broyées ; des roches volcaniques basiques avec une teneur mathématique en SiO₂ inférieure à 50 % en poids ; des roches volcaniques acides avec une teneur mathématique en SiO₂ supérieure à 50 % en poids ; la craie, la dolomite, la chaux, la magnésite et les produit de transformation de ceux-ci avec les monomères contenant des radicaux acides avec dégagement de CO₂, et des argiles absorbant l'eau comme la bentonite ; le feldspath ou du sable de quartz.

3. Matière solide selon la revendication 1 ou 2, comprenant en outre, des matières minérales telles que des agents épaississants, des stabilisateurs de mousse, des pièges de cations, des retardateurs de polymérisation et/ou des accélérateurs de gonflement.

4. Matière solide selon les revendications 1 à 3, comprenant en outre, des constituants solides supplémentaires choisis parmi des produits organiques naturels ou synthétiques comme des algues, le raphia, le lignite, le chanvre, le bois, le gruau de ricin, la houille, la paille, la tourbe et/ou des produits polymères insolubles dans l'eau et gonflant dans l'eau.

5. Matière solide selon les revendications 1 à 4, **caractérisée en ce que** le silicate de potassium est présent en tant que silicate alcalin soluble dans l'eau, tel qu'il se forme à partir de la fusion alcaline du sable de quartz.

6. Matière solide selon les revendications 1 à 5, **caractérisée en ce qu'**elle contient en outre, au moins un représentant solide ou liquide du groupe des engrais contenant K, N, P, Si.

7. Matière solide selon la revendication 1, **caractérisée en ce que** le monomère éthyléniquement insaturé, contenant des radicaux acide, soluble dans l'eau est choisi parmi au moins l'un de l'acide acrylique, l'acide méthacrylique, l'acide éthacrylique, l'acide crotonique, l'acide sorbique, l'acide maléique, l'acide fumarique, l'acide itaconique, l'acide vinylsulfonique, ainsi que des acides acrylamido- et méthacrylamido-alkylsulfoniques comme l'acide acrylamido-2-méthylpropanesulfonique, l'acide 2-méthacryloyloxyéthanesulfonique, l'acide 4-vinylbenzène-sulfonique, l'acide allylsulfonique, l'acide vinyltoluènesulfonique, l'acide vinylphosphonique ou l'acide vinylbenzènephosphonique.

8. Matière solide selon la revendication 7, **caractérisée en ce que** le monomère est choisi parmi l'acide acrylique, l'acide méthacrylique et l'acide maléique.

9. Matière solide selon les revendications 1 à 8, **caractérisée en ce que** le comonomère éthyléniquement insaturé, soluble dans l'eau est choisi parmi au moins l'un de l'acrylamide, le méthacrylamide, un (méth)acrylamide N-alkylé, un (méth)acrylamide N-dialkylaminoalkylé, le N-méthylol(méth)acrylamide, un N-vinylamide comme le N-vinylformamide, le N-vinylacétamide et le N-vinyl-N-méthylacétamide, le N-vinyl-N-méthyl-formamide, mais également la vinylpyrrolidone ainsi que des (méth)acrylates d'hydroxyalkyle comme l'acrylate d'hydroxyéthyle et des esters d'acide (méth)acrylique de polyéthylèneglycol-monoallyléther et des allyléthers de polyéthylèneglycol.

10. Matière solide selon les revendications 1 à 9, **caractérisée en ce que** le monomère éthyléniquement insaturé, soluble dans l'eau, polymérisable, contenant des radicaux acides est présent sous forme de sel de potassium.

11. Matière solide selon les revendications 1 à 10, **caractérisée en ce que** les matières minérales sont la lave, le tuf et/ou le diabas avec une granulométrie inférieure à 200 µm, de préférence inférieure à 100 µm.

12. Procédé de préparation d'une matière solide particulaire, de type terre meuble, absorbant l'eau et gonflant dans l'eau, selon les revendications 1 à 11,
**caractérisé en ce que** les matières minérales moyennement à finement broyées sont disposées avec les composants non polymérisant le cas échéant présents sous forme de carbonate d'alcalino-terreux, carbonate d'alcalin aqueux et/ou une suspension contenant du dioxyde de carbone, et au moins un monomère éthyléniquement insaturé, contenant des radicaux acides, soluble dans l'eau et un agent de réticulation sont ajoutés, mis à réagir avec la suspension avec libération de dioxyde de carbone et ensuite, après achèvement du développement de la mousse, la polymérisation est réalisée, et ensuite, le morceau de polymère obtenu est découpé et concassé sur un broyeur ou un hachoir de sorte que l'on obtienne des miettes.

13. Procédé selon la revendication 12,
**caractérisé en ce que** pour éviter la formation de grumeaux, on ajoute en outre, un catalyseur oxydant.

14. Procédé selon la revendication 12 ou 13, **caractérisé en ce que** le monomère et l'agent de réticulation, le cas échéant avec le comonomère, sont introduits ensemble dans la suspension.

15. Procédé selon les revendications 12 à 14, **caractérisé en ce que** la suspension contient, de manière dissoute, des substances alcalino-terreuses et alcalines, de préférence un hydroxyde alcalin, un carbonate alcalin et un silicate alcalin, en une quantité telle que maximum 40 % en moles des radicaux acides sont neutralisés.

16. Utilisation de la matière solide selon les revendications 1 à 11, avec un taux de neutralisation allant de 1 à 40 % en moles pour absorber des liquides alcalins et/ou ammoniaqués et pour le traitement de masses provenant de la décomposition bactérienne de substances organiques, par exemple le lisier.

17. Utilisation de la matière solide selon les revendications 1 à 11, comme réservoirs d'eau et fournisseurs d'agent nutritif pour la croissance, la germination et la culture de plantes, sans autre addition, comme substrat ou comme additif à la terre en mélange avec la terre, pour améliorer la terre et la température de la terre, comme matériau support pour les engrais solides et liquides, piégés dans des structures fibreuses planes, naturelles et/ou synthétiques, comme des mats ou des voiles, pour la création de suspensions, pour la création de toits, incorporés avec des matières naturelles ou synthétiques qui peuvent flotter en des structures fibreuses planes, naturelles et/ou synthétiques, comme des mats ou des voiles, pour la culture de plantes telles que le riz dans des terrains humides, comme des surfaces totalement ou partiellement immergées, comme matériau support pour insecticide, pesticide, bactéricide et fongicide, comme matériau support pour particules solides pulvérulente, minérales finement à très finement granulaires, biologiques naturelles et/ou synthétiques comme des fractions très fines de polymères broyés ou pour la préparation de filtres à poussières.
